(19) Europäisches Patentamt / European Patent Office / Office européen des brevets

(11) EP 3 975 101 A1

(12) EUROPEAN PATENT APPLICATION
published in accordance with Art. 153(4) EPC

(43) Date of publication:
30.03.2022  Bulletin 2022/13

(21) Application number: 20809451.6

(22) Date of filing: 24.04.2020

(51) International Patent Classification (IPC):
G06Q 40/06 (2012.01)

(52) Cooperative Patent Classification (CPC):
G06Q 40/06

(86) International application number:
PCT/JP2020/017820

(87) International publication number:
WO 2020/235300 (26.11.2020 Gazette 2020/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.05.2019  JP 2019094586

(71) Applicant: Hitachi, Ltd.
Tokyo 100-8280 (JP)

(72) Inventors:
• SUGANUMA, Manabu
  Tokyo 100-8280 (JP)
• OGAWA, Jun
  Tokyo 100-8280 (JP)
• YAMAOKA, Masanao
  Tokyo 100-8280 (JP)
• OKUYAMA, Takuya
  Tokyo 100-8280 (JP)

(74) Representative: MERH-IP Matias Erny Reichl
Hoffmann
Patentanwälte PartG mbB
Paul-Heyse-Strasse 29
80336 München (DE)

(54) PORTFOLIO CREATION ASSISTANCE DEVICE AND PORTFOLIO CREATION ASSISTANCE METHOD

(57)     [Problem] To efficiently generate multiple portfolio candidates based on investment policies of each financial institution and present the portfolio candidates to a user in an easily understandable form.

[Solution] A portfolio creation assistance device 100, includes: a storage unit 101 storing information on each of financial commodities; and a computation unit 104 performing a computation of an Ising model of a predetermined expression in which items of an expected return rate, a price drop risk, and a market sensitivity in a portfolio including combined predetermined ones of the financial commodities indicated by the information are combined with weights for the respective items, wherein the computation unit 104 outputs portfolios each obtained for one of patterns of the weights for the respective items as a result of the computation to a predetermined device, the portfolios each minimizing a value of the predetermined expression.

FIG. 2

**Description**

[Technical Field]

The present invention relates to a portfolio creation assistance device and a portfolio creation assistance method.

[Background Art]

The concept of a so-called combinatorial optimization problem, which searches for a solution that maximizes or minimizes desired parameters under predetermined conditions, is applicable to complicated problems in the real world such as mitigation of traffic congestion and reduction of logistics cost in global supply chains.

On the other hand, such a problem entails an explosive number of candidate solutions; for this reason, it is difficult to solve the problem within a practicable time without a calculator achieving considerable calculation performance such as a supercomputer and a quantum computer.

For example, as a conventional technique related to a quantum computer, there have been proposed a technique (see PTL 1) and the like that are related to a calculator that enables high-speed computation for inverse problems and combinatorial optimization problems that require an exhaustive search. In this technique, a spin is used as a variable in the computation and a problem to be solved is set using spin-spin interaction and a local field acting on each spin. All spins are caused to orient toward one direction by an external magnetic field at time t=0 and the external magnetic field is gradually reduced such that the external magnetic field becomes zero at time t=τ. Each spin is time-evolved in such a way that the direction, which follows an effective magnetic field determined by all actions of spin-spin interaction and external magnetic fields of each site at time t, is determined. In this case, the direction of spin is not completely aligned in the effective magnetic field and is caused to be a quantum mechanically corrected direction such that the system is caused to maintain in an approximately ground state.

Meanwhile, as a technique for improving the efficiency of processing for a problem concerning determination of a portfolio of financial commodities among the problems in the real world as described above, there have been also proposed a program (see PTL 2) and the like that causes a computer to execute: an input procedure to input an expectation value of a return rate of an individual financial commodity, an individual variable factor that is a factor affecting return peculiarly to a financial commodity, a common variable factor that is a factor affecting return of all financial commodities, and a constraint parameter representing a constraint condition that should be taken into consideration in optimizing a utility function including a return rate of all the financial commodities and a risk affecting the return; a storage procedure to store the expectation value, the individual variable factor, the common variable factor, and the constraint parameter; a portfolio return rate calculation procedure to calculate a constraint expression of the return rate; an optimum portfolio seeking procedure to seek for a financial commodity to buy and a buying volume so as to maximize the utility function based on the expectation value, the individual variable factor, the common variable factor, the constraint parameter, and the constraint expression of the return rate by using mathematical programming which is a method of maximizing an objective function using a predetermined constraint expression; and a constraint condition determination procedure to determine whether the financial commodity to buy and the buying volume sought out in the seeking procedure satisfy a constraint expression related to the risk.

[Citation List]

[Patent Literature]

[PTL 1] International Publication No. WO2016/157333
[PTL 2] Japanese Patent Application Publication No. 2006-221679

[Summary of Invention]

[Technical Problem]

In a case where a financial institution or the like holds multiple financial commodities, there is a need for optimizing a portfolio thereof to maximize the return. To address this, in the financial institution, a predetermined person in charge revises the portfolio depending on the situation or on a regular basis.

On the one hand, there are a variety of factors including the profitability of each of financial commodities included in such a portfolio and various risks, and also the way of thinking about these factors greatly vary among the financial institutions.

For this reason, if a general computer is employed to optimize a portfolio in which many financial commodities are combined, the calculation amount is increased in an exponential manner in accordance with the number of factors described above. As a result, a huge amount of time is required to complete the calculation, or overflow occurs. In other words, it has been difficult to make a timely revision of a portfolio.

On the other hand, there has been no proposal of a mode of appropriately applying the quantum computer technology to a portfolio. As a matter of course, in the current situation where no appropriate calculation result can be obtained with the aforementioned many factors taken into consideration, presenting the result to a user in an easily understandable form has been neither implemented.

Given the circumstances, an object of the present invention is to provide a technique that makes it possible to efficiently generate multiple portfolio candidates based on investment policies of each financial institution and present the portfolio candidates to a user in an easily understandable form.

[Solution to Problem]

A portfolio creation assistance device, comprising: a storage unit storing information on each of financial commodities; and a computation unit performing a computation of an Ising model of a predetermined expression in which items of an expected return rate, a price drop risk, and a market sensitivity in a portfolio including combined predetermined ones of the financial commodities indicated by the information are combined with weights for the respective items, wherein the computation unit outputs portfolios each obtained for one of patterns of the weights for the respective items as a result of the computation to a predetermined device, the portfolios each minimizing a value of the predetermined expression.

A portfolio creation assistance method, wherein an information processing device including a storage unit storing information on each of financial commodities performs: performing a computation of an Ising model of a predetermined expression in which items of an expected return rate, a price drop risk, and a market sensitivity in a portfolio including combined predetermined ones of the financial commodities indicated by the information are combined with weights for the respective items; and outputting portfolios each obtained for one of patterns of the weights for the respective items as a result of the computation to a predetermined device, the portfolios each minimizing a value of the predetermined expression.

[Advantageous Effects of Invention]

According to the present invention, it is possible to efficiently generate multiple portfolio candidates based on the investment policies of each financial institution and present the portfolio candidates to a user in an easily understandable form.

[Brief Description of Drawings]

[Fig. 1] Fig. 1 is a network configuration diagram including a portfolio creation assistance device of the present embodiment.
[Fig. 2] Fig. 2 is a diagram illustrating a hardware configuration example of the portfolio creation assistance device in the present embodiment.
[Fig. 3] Fig. 3 is a diagram illustrating a timing chart example in the present embodiment.
[Fig. 4] Fig. 4 is a diagram indicating a flowchart related to the fundamental concept in the present embodiment.
[Fig. 5] Fig. 5 is a diagram illustrating a data configuration example of financial commodity information of the present embodiment.
[Fig. 6] Fig. 6 is a diagram illustrating a data configuration example of weighting information of the present embodiment.
[Fig. 7] Fig. 7 is a diagram indicating a flow example of a portfolio creation assistance method in the present embodiment.
[Fig. 8] Fig. 8 is a diagram illustrating an output example 1 in the present embodiment.
[Fig. 9] Fig. 9 is a diagram illustrating an output example 2 in the present embodiment.
[Fig. 10] Fig. 10 is a diagram illustrating an output example 3 in the present embodiment.
[Fig. 11] Fig. 11 is a diagram illustrating an output example 4 in the present embodiment.
[Fig. 12] Fig. 12 is a diagram illustrating an output example 5 in the present embodiment.
[Fig. 13] Fig. 13 is a diagram illustrating an output example 6 in the present embodiment.

[Fig. 14] Fig. 14 is a diagram illustrating an output example 7 in the present embodiment.
[Fig. 15] Fig. 15 is a diagram illustrating an output example 8 in the present embodiment.
[Fig. 16] Fig. 16 is a diagram illustrating an output example 9 in the present embodiment.

[Description of Embodiments]

---About Annealing Machine---

As described in PTL 1 described above, the applicant has been developing the quantum computation technology to solve problems of exhaustive search problems based on big data (including the concept of combinatorial optimization problems), for example.

In order to solve such exhaustive search problems, in general, there are great expectations for a quantum computer. A quantum computer includes a basic element called a quantum bit and implements "0" and "1" at the same time. Therefore, a quantum computer is capable of concurrently calculating all candidate solutions as an initial value and has a possibility to implement an exhaustive search. However, a quantum computer needs to maintain quantum coherence over the entire calculation time.

Against this background, a method called adiabatic quantum computation (reference literature: E. Farhi, et al., "A quantum adiabatic evolution algorithm applied to random instances of an NP-complete problem," Science 292, 472 (2001).) has started to attract attention. This method is for converting a problem such that the ground state of a physical system becomes a solution and obtaining the solution by finding the ground state.

The Hamiltonian of the physical system in which a problem is set is H^p. Note that, at a time point when the computation is started, the Hamiltonian is not set to H^p, and a different Hamiltonian H^0 that is easy to prepare because the ground state is clear is set. Next, the transition of the Hamiltonian from H^0 to H^p is made taking enough time. With taking enough time, the system remains in the ground state, and the ground state of the Hamiltonian H^p can be obtained. This is the principle of the adiabatic quantum computation. Where the calculation time is $\tau$, the Hamiltonian is Expression (1).

[Expression 1]

$$\hat{H}(t) = \left(1 - \frac{t}{\tau}\right)\hat{H}_0 + \frac{t}{\tau}\hat{H}_{\mathrm{p}}$$

Then, time-evolution is made based on the Schrodinger equation of Expression (2), and thus a solution is obtained.

[Expression 2]

$$i\hbar \frac{\partial}{\partial t}\left|\psi(t)\right\rangle = \hat{H}(t)\left|\psi(t)\right\rangle$$

The adiabatic quantum computation is also applicable to a problem that requires an exhaustive search and reaches a solution in a one-way process. However, if the calculation process needs to follow the Schrodinger equation of Expression (2), maintaining of quantum coherence is required as with a quantum computer.

However, while a quantum computer repeats gate operations on one quantum bit or between two quantum bits, the adiabatic quantum computation allows for a concurrent interaction over the entire quantum bit system, and thus they have different ideas about coherence.

For example, thinking of gate operation on a quantum bit. In this case, if there is an interaction between the quantum bit and another quantum bit, this causes decoherence; however, since all quantum bits interact concurrently in the adiabatic quantum computation, no decoherence occurs in a case like this example. Reflecting this difference, the adiabatic quantum computation has been thought to be more robust to decoherence than a quantum computer is.

As described above, the adiabatic quantum computation is effective to a difficult problem that requires an exhaustive search. Additionally, a spin is used as a variable in the computation, and a problem intended to be solved is set using spin-spin interaction and a local field acting on each spin.

All spins are caused to orient toward one direction by an external magnetic field at time t=0, and the external magnetic field is gradually reduced such that the external magnetic field becomes zero at time t=$\tau$.

Each spin is time-evolved in such a way that the direction, which follows an effective magnetic field determined by all actions of spin-spin interaction and external magnetic fields of each site at time t, is determined.

In this case, the direction of spin is not completely aligned in the effective magnetic field and is caused to be a quantum mechanically corrected direction such that the system is caused to maintain in an approximately ground state.

Additionally, a term (relaxation term) that maintains each spin in the original direction during the time-evolution is added to effective magnetic fields so as to improve the convergent of solution.

As a portfolio creation assistance device in the present embodiment, an annealing machine that performs the above-described adiabatic quantum computation is assumed; however, as a matter of course, it is not limited thereto, and any device may be applicable as long as the device is capable of appropriately solving a combinatorial optimization problem by following a portfolio creation assistance method of the present invention. Specifically, not only hardware implemented by an electronic circuit (a digital circuit and the like) by an annealing method but also a method of implementation by a superconductive circuit and the like are included. Also, hardware that implements the Ising model by a method other than the annealing method may be applicable. For example, a laser network method (optical parametric oscillation), a quantum neural network, and the like are also included. Moreover, although it has a partially different idea as described above, it is also possible to implement the present invention by a quantum gate method that replaces the calculation performed with the Ising model with a gate such as the Hadamard gate, a rotation gate, and a controlled NOT gate.

---Network Configuration---

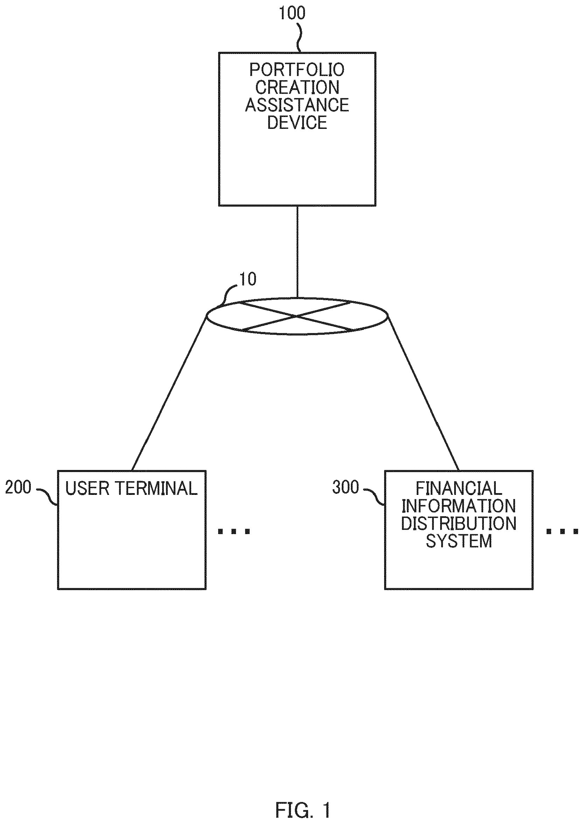

An embodiment of the present invention is described in detail with reference to the drawings. Fig. 1 is a network configuration diagram including a portfolio creation assistance device 100 of the present embodiment.

The portfolio creation assistance device 100 illustrated in Fig. 1 is a computer device that is capable of efficiently generating multiple portfolio candidates based on the investment policies of each financial institution and presenting the multiple portfolio candidates to a user in an easily understandable form; specifically, an annealing machine is assumed as an example.

Note that, general description of an annealing machine is as already given based on PTL 1, and its details such as specific configuration and operations are properly omitted (the same applies hereafter).

The portfolio creation assistance device 100 of the present embodiment is data-communicably coupled with a user terminal 200 and a financial information distribution system 300 through an appropriate network 10 such as the Internet.

Among the above, the user terminal 200 is a terminal that accepts provision of information on a portfolio of financial commodities from the portfolio creation assistance device 100.

As a user of this user terminal 200, specifically, a person in charge as an institutional investor of such as a financial institution, an insurance company, and the like, or a general retail investor may be assumed.

Additionally, the information on a portfolio of financial commodities provided by the portfolio creation assistance device 100 is information on an optimum portfolio (that is, a financial commodity group) that is identified by solving an Ising model (mathematical expression including, as variables, items of an expected return rate, a price drop risk, and a market sensitivity in each financial commodity) for each of the portfolio candidates in which various financial commodities are combined at a predetermined ratio (that is, a holding ratio) for each pattern of weighting on the items of the expected return rate, the price drop risk, and the market sensitivity (such as the interest delta and the exchange delta) (the weighting depending on the viewpoint considered important by the user).

In this case, the values of the expected return rate, the price drop risk, and the market sensitivity (such as the interest delta and the exchange delta) in the optimum portfolio are presented, naturally.

Note that, the portfolio creation assistance device 100 is a device that outputs the information on the optimum portfolios for the respective patterns of weighting (the viewpoints considered important by the user) as described above in such a way that the information can be easily compared and considered among the optimum portfolios.

That is, based on the values of the items of the expected return rate, the price drop risk, and the market sensitivity, in each optimum portfolio (hereinafter, simply referred to as a portfolio), the portfolio creation assistance device 100 plots the position of each of the portfolios on at least one of a plane defined by two axes of the price drop risk and the expected return rate, a plane defined by two axes of the expected return rate and the interest delta as the market sensitivity, and a plane defined by two axes of the expected return rate and the exchange delta as the market sensitivity, and outputs the plane on which the plotting is performed to an appropriate device such as the user terminal 200. In this case, a corresponding efficient frontier curve is drawn on the plane on which the plotting is performed (an already-existing technique may be applied for the generation and the like of the efficient frontier curve).

With such output processing being performed, the properties of each portfolio are clearly presented from multiple viewpoints, and the portfolio designing operation by a person in charge in a financial institution is effectively assisted.

Additionally, predetermined highlighting processing may be performed on a portfolio out of the portfolios plotted on the plane defined by the two axes of the price drop risk and the expected return rate that is a portfolio having a lower price drop risk and a higher return than those of a current portfolio of the user (as a matter of course, the user provides in advance the portfolio creation assistance device 100 with the financial commodities and its holding ratio and the values of the items of the expected return rate, the price drop risk, and the market sensitivity) and being plotted on a region above the efficient frontier curve.

As the above-described highlighting processing, although it is not particularly limited, processing of making the color, shape, size, pattern, pattern of blinking or flashing, and the like of a plot (point) of a corresponding portfolio different from that of other portfolios may be assumed, for example.

With such output processing being performed, it is possible to clearly present a new portfolio that can be expected to be improved from a current portfolio in both the expected return rate and risk.

Note that, the portfolio creation assistance device 100 finds a specific portfolio plotted on a region above the efficient frontier curve out of the portfolios plotted on the above-described plane defined by the two axes of the price drop risk and the expected return rate and calculates the value of return on risk by dividing the value of the expected return rate by the value of the price drop risk of the portfolio.

In this case, for the above-described specific portfolio, the portfolio creation assistance device 100 arranges an object having an attribute according to the magnitude of the value of return on risk on the plane defined by two axes of the interest delta and the exchange delta and outputs the specific portfolio.

As this object, a display object in a predetermined shape such as circle and rectangle can be assumed, for example. Additionally, its attribute is assumed to be a size, color, shape, pattern, pattern of blinking or flashing, and the like according to the magnitude of the value of return on risk.

With this, it is possible to express a portfolio based on all the viewpoints of the expected return rate, the price drop risk, and the market sensitivity (the interest delta and the exchange delta), that is, in a four-dimensional event, and present the portfolio to the user while clearly distinguishing it among portfolios.

Moreover, the portfolio creation assistance device 100 applies buying and selling costs on which information is held in advance to financial commodities that make the difference between at least one of the above-described portfolios and the current portfolio of the user to identify the cost required for portfolio change from the current portfolio to an optimum portfolio, and outputs the information on the cost. With this, it is possible to present the information on the cost for changing a portfolio, and the user is allowed to easily perform the portfolio creation operation in terms of a comprehensive viewpoint including not only the above-described information on the items but also the cost.

A person in charge in a financial institution or the like who is provided with such various kinds of information on portfolios can make a determination on selecting an appropriate portfolio not only simply and accurately but also quickly.

Note that, conceivable patterns as the above-described pattern of weighting are a pattern in which the items are evaluated with an equal importance (an equal weight value is assigned to the items), a pattern in which the return and the price drop risk are considered more important and the interest delta and the exchange delta are considered less important (weight values for the items of the return and the price drop risk > weight values for the interest delta and the exchange delta), and a pattern in which the return is considered most important (a weight value for the item of the return > weight values for the items of the price drop risk, the interest delta, and the exchange delta). Note that, these patterns are nonlimiting examples.

On the other hand, the financial information distribution system 300 is a system that distributes information on various financial commodities to the portfolio creation assistance device 100.

As this financial information distribution system 300, a server device operated by an organization holding information on financial commodities such as various financial institutions, brokerage companies, governmental institutions, and the like can be assumed.

As the above-described various financial commodities, stocks, futures instruments, foreign exchanges, and the like can be assumed, for example. As the information held, the market sensitivity such as the expected return rate, the price drop risk, the interest delta, and the exchange delta, the commodity price (example: the stock index, the commodity futures price, the foreign exchange rate, the foreign exchange forward rate, the long-short outstanding position ratio, the volatility of various indexes, the risk reversal, and the like), various commissions (example: the buying and selling commission, the management commission), and the like can be assumed.

Conventionally, in order to calculate an optimum portfolio, the calculation amount is increased in an exponential manner in accordance with an increase in elements such as variations of weighting on the above-described items and combination patterns of financial commodities, and it takes a long time to complete the calculation. However, with the portfolio creation assistance device 100 using an annealing machine being employed, it is possible to perform calculation without much dependency on the increase in elements.

---Hardware Configuration---

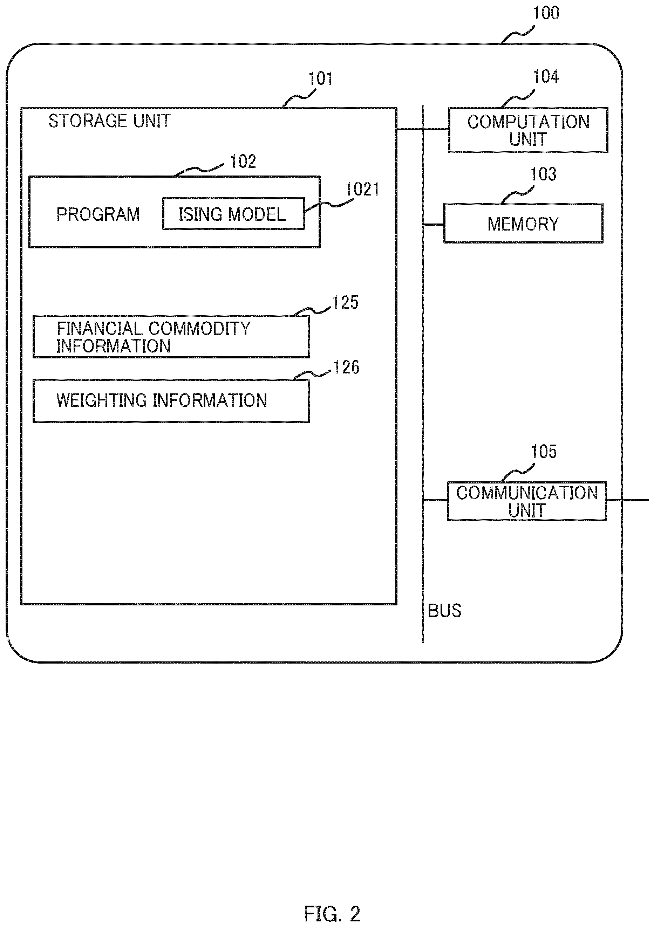

Additionally, a hardware configuration of the portfolio creation assistance device 100 of the present embodiment is implemented as illustrated in Fig. 2 described below. That is, the portfolio creation assistance device 100 includes a storage unit 101, a memory 103, a computation unit 104, and a communication unit 105.

Among the above, the storage unit 101 includes an appropriate non-volatile storage element such as an SSD (solid state drive) or a hard disk drive. Meanwhile, the memory 103 includes a volatile storage element such as a RAM.

Additionally, the computation unit 104 is a CPU that executes a program 102 held in the storage unit 101 by reading the program 102 into the memory 103 to make an overall control of the device itself and also performs various kinds of determination, computation, and control processing.

Moreover, the communication unit 105 includes a network interface card that is coupled with the network 10 and is responsible for communication processing with other devices such as the user terminal 200 and the financial information distribution system 300.

Note that, when the portfolio creation assistance device 100 is a stand-alone machine, it is preferable for the portfolio creation assistance device 100 to further include an input unit (including a keyboard, a mouse, and so on) to receive key inputs and sound inputs from the user and an output unit such as a display to display processing data.

Additionally, the storage unit 101 stores therein not only the program 102 for implementing a function required to operate as the portfolio creation assistance device of the present embodiment but also financial commodity information 125 and weighting information 126 at least. Note that, details of such information are described later.

Moreover, the program 102, that is, an algorithm implementing operations to be an annealing machine, holds information on an Ising model 1021, which is a problem intended to be solved. This Ising model 1021 is set in advance by a manager or the like based on a portfolio from which the information is provided, various information on financial commodities forming the portfolio, the portfolio investment policies of a target financial institution, and the like.

Note that, the adiabatic quantum computation described in the general description of an annealing machine is also called the quantum annealing as another name, which is the concept of the classical annealing developed into the quantum mechanics. In other words, it is also possible to construe that the adiabatic quantum computation is originally capable of operating classically, and quantum mechanic effects are added thereto in order to improve the performances of high speed and percentage of obtaining correct solutions. Accordingly, the present invention implements a computation method and device that are classic but have the quantum mechanic effects by keeping the computation unit itself classic and introducing a parameter that is quantum mechanically determined in the computation process.

Based on the above-described concept, in the following examples, a classical algorithm that obtains the ground state as a solution and a device that implements the algorithm are described while describing the relevance with the adiabatic quantum computation.

In the portfolio creation assistance device 100 with such premises, N variables $s_j^z$ (j = 1, 2, ..., N) have a range of $-1 \leq s_j^z \leq 1$, and a local field $g_j$ and an intervariable interaction $J_{ij}$ (i, j = 1, 2, ..., N) set a problem.

Additionally, the computation unit 104 divides a time into m and performs the computation discretely from $t=t_0$ ($t_0$ = 0) to $t_m$ ($t_m$ = $\tau$), and in order to obtain a variable $S_j^z(t_k)$ at each time $t_k$, the computation unit 104 uses a value of a variable $S_j^z(t_{k-1})$ (i = 1, 2, .., N) at previous time $t_{k-1}$ and a coefficient 9pina or 9pinb of a relaxation term to obtain $B_j^z(t_k) = \{\Sigma_i J_{ij} S_i^z(t_{k-1}) + g_j + sgn(s_j^z(t_{k-1})) \cdot 9pina\} \cdot t_k/\tau$ or $B_j^z(t_k) = \{\Sigma_i J_i J S_j^z(t_{k-1}) + g_j + 9pinb.S_j^z(t_{k-1})\} \cdot t_k/\tau$, defines a function f such that the range of the above-described variable $S_j^z(t_k)$ becomes $-1 \leq s_j^z(t_k) \leq 1$ to obtain $S_j^z(t_k) = f(B_j^z(t_k),t_k)$, makes the above-described variable $S_j^z$ close to -1 or 1 while advancing the time step from $t=t_0$ to $t=t_m$, and defines a solution as $S_j^{zd}$ = -1 if $s_j^z < 0$ eventually, or as $S_j^{zd}$ = 1 if $S_j^z > 0$.

The coefficient gpinb is a value that is 50% to 200% of an average value of $|J_{ij}|$, for example. Additionally, regarding the local field $g_j$ for setting a problem, it is also possible to add a correction term $\delta g_{j'}$ to $g_{j'}$ for only a site $j'$ so as to increase the magnitude of $g_{j'}$ for only the site $j'$. Moreover, the correction term $\delta g_{j'}$ is a value that is 10% to 100% of the average value of $|J_{ij}|$, for example.

Subsequently, the fundamental principle of an annealing machine is described through a transition started from a quantum mechanical description to the classical form.

A ground state search problem of the Ising spin Hamiltonian provided by Expression (3) includes a problem categorized as so-called NP-hardness and is thereby known as a useful problem (literature: F. Barahona, "On the computational complexity of Isingspin glass models," J. Phys. A: Math. Gen. 15, 3241 (1982).).

[Expression 3]

$$\hat{H}_{\mathrm{p}} = -\sum_{i>j} J_{ij} \hat{\sigma}_i^z \hat{\sigma}_j^z - \sum_j g_j \hat{\sigma}_j^z$$

where $J_{ij}$ and $g_j$ are problem setting parameters, $\sigma^{\wedge z}$ is a z-component of Pauli spin matrices and takes an eigenvalue of $\pm 1$, and i and j each denote a site of a spin. An Ising spin is a variable that can take only $\pm 1$ as a value, and Expression (3) is an Ising spin system because the eigenvalue of $\sigma^{\wedge z}$ is $\pm 1$.

The Ising spin in Expression (3) is not necessarily a spin literally and may be anything physical as long as the Hamiltonian is described with Expression (3).

For example, it is also possible to associate whether a portfolio of financial commodities is employed or not employed with $\pm 1$ or to associate high and low of a logic circuit with $\pm 1$, and it is also possible to associate vertically polarized waves and horizontally polarized waves of light with $\pm 1$ or to associate phases of 0 and $\pi$ with $\pm 1$.

As with the adiabatic quantum computation, the method exemplified herein prepares a computation system in the ground state of the Hamiltonian provided by Expression (4) at time t=0.

[Expression 4]

$$\hat{H}_0 = -\gamma \sum_j \hat{\sigma}_j^x$$

where $\gamma$ is a proportionality constant determined depending on the magnitude of an external stimulus uniformly applied onto all sites j, and $\sigma^{\wedge x}_j$ is an x-component of Pauli spin matrices. When the computation system is the spin itself, the external stimulus means a magnetic field.

Expression (4) is comparable to applying of a transverse magnetic field, and the ground state is obtained when all spins are directed to an x direction ($\gamma > 0$). The Hamiltonian for setting a problem is defined as the Ising spin system including only the z-component; however, Expression (4) includes the x-component of the spin. Accordingly, the spin in the computation process is not Ising but vectorial (Bloch vector). At t=0, the computation is started with the Hamiltonian of Expression (4), and the Hamiltonian is changed gradually as time t progresses, and eventually, the Hamiltonian described as Expression (3) is obtained and its ground state is obtained as a solution.

[Expression 5]

$$\hat{H} = -\boldsymbol{B} \cdot \hat{\boldsymbol{\sigma}}$$

where $\sigma^\wedge$ denotes three components of Pauli spin matrices as a vector. The ground state is obtained when the spin is directed to a magnetic field direction and can be expressed as $<\sigma^\wedge> = B/|B|$ where $<\cdot>$ denotes a quantum mechanical expectation value. In the adiabat process, the ground state is intended to be maintained constantly; therefore, the direction of the spin always follows the direction of the magnetic field.

The above discussion can be expanded to a multi-spin system. At t=0, the Hamiltonian is provided by Expression (4). This means that a magnetic field $B_j^x = \gamma$ is uniformly applied onto all spins. At t>0, the x-component of the magnetic field is gradually weakened, and $B_j^x = \gamma(1 - t/\tau)$ is obtained. For the z-component, an effective magnetic field is expressed as Expression (6) because there is the spin-spin interaction.

[Expression 6]

$$\hat{B}_j^z(t) = \frac{t}{\tau}\left(\sum_{i \neq j} J_{ij}\hat{\sigma}_i^z + g_j\right)$$

Since the direction of the spin can be defined by $<\sigma^{\wedge z}>/<\sigma^{\wedge x}>$, the direction of the spin is defined based on Expression (7) if the direction of the spin follows the effective magnetic field.

[Expression 7]

$$\left\langle \hat{\sigma}_j^z \right\rangle / \left\langle \hat{\sigma}_j^x \right\rangle = \left\langle \hat{B}_j^z(t) \right\rangle / \left\langle \hat{B}_j^x(t) \right\rangle$$

Expression (7) is a quantum mechanical description but has an expectation value; therefore, unlike Expressions (1) to (6), Expression (7) is a relational expression related to the classical amount.

In the classical system, there is no non-local correlation of the quantum mechanics (quantum sewing); for this reason, the direction of the spin should be completely determined based on the local field of each site, and Expression (7) determines the behavior of the classical spin system. In the quantum system, there is non-local correlation; for this reason, Expression (7) is deformed, which is described later, and now the classical system defined by Expression (7) is described in order to describe the fundamental mode of the invention.

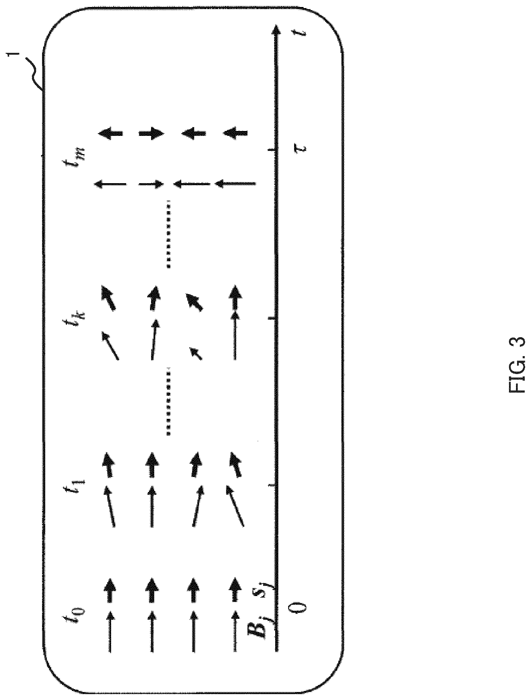

Fig. 3 illustrates a timing chart (1) for obtaining the ground state of a spin system. Since the description in Fig. 3 is related to the classical amount, the spin in the site j is denoted by sj instead of $\sigma^{\wedge}j$. Additionally, according to the above, an effective magnetic field Bj in Fig. 3 is a classical amount. At t=0, the effective magnetic field Bj directed to the right is applied to all sites, and all the spins Sj are initiated to be directed to the right.

As time t progresses, a magnetic field in a z-axis direction and the spin-spin interaction are gradually added, and eventually, the spins are directed to a +z direction or a -z direction, and the z-component of the spin Sj becomes $s_j^z = +1$ or -1. Time t is preferably continuous; however, in the practical computation process, time t may be discrete so as to improve the convenience. The discrete case is described below.

The spin exemplified herein is a vectorial spin since there are added not only the z-component but also the x-component. Also, the behavior as a vector can be understood with reference to Fig. 3. There has been no description of a y-component; this is because the external stimulus direction is set in an xz plane and thus no y-component exists in the external stimulus, and accordingly $<\sigma^{\wedge Y}> = 0$ is obtained.

As the spin for the computation system, three-dimensional vectors of a magnitude of 1 (this is called Bloch vector, which can describe the state with a point on a spherical surface) is assumed; however, with the setting of axes in the illustrated example, only two dimensions may be taken into consideration (the state can be described with a point on a circle).

Additionally, since $\gamma$ is constant, $B_j^x(t) > 0(\gamma > 0)$ or $B_j^x(t) < 0(\gamma < 0)$ is satisfied. In this case, a two-dimensional spin vector can be described with only a semicircle, and if $S_j^z$ is designated with [-1, 1], a two-dimensional spin vector is defined with one variable of $S_j^z$. Accordingly, in the example herein, the spin is a two-dimensional vector, but can also be described as a one-dimensional continuous variable having a range of [-1, 1].

In the timing chart in Fig. 3, an effective magnetic field of each site is obtained at time t=tk, and the value is used to obtain the direction of the spin at t=tk by Expression (8) .

[Expression 8]

$$s_j^z(t_k) / s_j^x(t_k) = B_j^z(t_k) / B_j^x(t_k)$$

Since Expression (8) is a rewritten form of Expression (7) into a description related to the classical amount, no signs of $<\cdot>$ are used.

Next, an effective magnetic field at t=tk+l is obtained by using the value of the spin at t=tk. The effective magnetic fields at the times are specifically described as Expressions (9) and (10) .

[Expression 9]

$$B_j^x\left(t_{k+1}\right)=\left(1-\frac{t_{k+1}}{\tau}\right)\gamma$$

[Expression 10]

$$B_j^z\left(t_{k+1}\right)=\frac{t_{k+1}}{\tau}\left(\sum_{i\neq j}J_{ij}s_i^z\left(t_k\right)+g_j\right)$$

Hereinafter, spins and effective magnetic fields are alternately obtained in accordance with the procedure schematically illustrated in the timing chart in Fig. 3.

In the classical system, the magnitude of a spin vector is 1. In this case, each component of the spin vector is described as $S_j^z(tk) = \sin\theta$ and $S_j^x(tk) = \cos\theta$ by using a parameter $\theta$ defined by $\tan\theta = B_j^z(tk)/B_j^x(tk)$.

The above expressions are rewritten as $S_j^z(tk) = \sin(\arctan(B_j^z(tk)/B_j^x(tk)))$ and $S_j^x(tk) = \cos(\arctan(B_j^z(tk)/B_j^x(tk)))$.

As it is clear from Expression (9), a variable of $B_j^x(tk)$ is only tk, and $\tau$ and $\gamma$ are constants. Accordingly, $S_j^z(tk) = \sin(\arctan(B_j^z(tk)/B_j^x(tk)))$ and $S_jx(tk) = \cos(\arctan(B_j^z(tk)/B_j^x(tk)))$ can also be expressed in a generalized form like $S_j^z(tk) = f1(B_j^z(tk),tk)$ and $S_j^x(tk) = f2(B_j^z(tk),tk)$ as functions in which $B_j^z(tk)$ and tk are variables.

Since the spin is described as a two-dimensional vector, there are two components of $S_j^z(tk)$ and $s_j^x(tk)$; however, if $B_j^z(tk)$ is determined based on Expression (10), $S_j^x(tK)$ is unnecessary.

This corresponds to the fact that the spin state can be described only with $S_j^z(tk)$ having a range of [-1, 1]. The eventual solution $S_j^{zd}$ needs to be $S_j^{zd} = -1$ or 1, and $S_j^{zd} = 1$ is obtained if $S_j^z(\tau) > 0$, while $S_j^{zd} = -1$ is obtained if $S_j^z(\tau) < 0$.

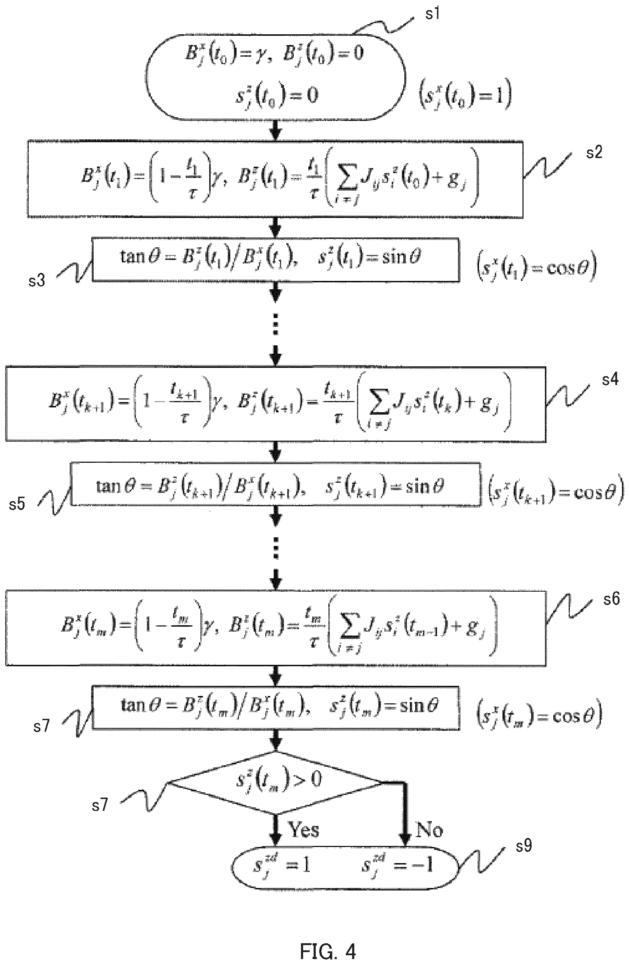

Fig. 4 indicates a flowchart in which the above-described algorithms are listed. In this case, tm = $\tau$. Each of steps s1 to s9 in the flowchart in Fig. 4 corresponds to processing at a corresponding time in the timing chart in Fig. 3 from time t=0 to t=$\tau$. That is, the steps s2, s4, and s6 in the flowchart correspond to Expressions (9) and (10) described above in t=t1, tk+l, and tm, respectively. The eventual solution is determined in the step s8 with $S_j^{zd} = -1$ being obtained if $s_j^z < 0$, and $S_j^{zd} = 1$ being obtained if $S_j^z > 0$ (s9) .

So far, how is a problem expressed by Expression (3) is solved has been described. Next, how is a specific problem expressed by Expression (3) including the local field gj and the intervariable interaction Jij (i, j = 1, 2, ..., N) is described using a specific example.

As the specific problem herein, that is, the Ising model 1021, a problem that estimates a combination of financial commodities at a predetermined holding ratio that minimizes the result of an expression of price drop risk - expected return rate - interest delta + exchange delta, that is, an optimum portfolio, is assumed. In this case, a coefficient, that is, a weight value, by which each variable in the expression (the price drop risk, the expected return rate, the interest delta, or the exchange delta) is multiplied, can be assumed to vary variously depending on portfolio investment policies and the like desired by the user.

For example, when the price drop risk is considered important, a weight for the price drop risk:0.4, a weight for the expected return rate:0.2, a weight for the interest delta:0.2, and a weight for the exchange delta:0.2 are set. Note that, a total value of the weight values for the items is 1.

In this case, as the local field gj, an expression of the price drop risk - the expected return rate - the interest delta + the exchange delta of each portfolio for each investment policy, that is, pattern of weighting, is assumed.

Additionally, $\sigma^{z}_j$ is considered to be a variable for affecting increase or decrease in the price of a predetermined financial commodity with increase or decrease in the price of another financial commodity. The correlation strength of increase or decrease in the price between financial commodities, that is, the sensitivity, is expressed through the intervariable interaction Jij.

The intervariable interaction Jij is specifically set through the considerations above, and a balanced point at which the holding ratio of financial commodities converges is identified through the ground state search for the Ising model 1021 expressed by Expression (3), that is, the above-described searching for the ground state in which the result of the expression of the price drop risk - the expected return rate - the interest delta + the exchange delta is the minimum. This holding ratio of financial commodities in the ground state is an optimum portfolio (a predetermined holding ratio of financial commodities forming the optimum portfolio) predicted for the pattern of weighting.

---Data Structure Example---

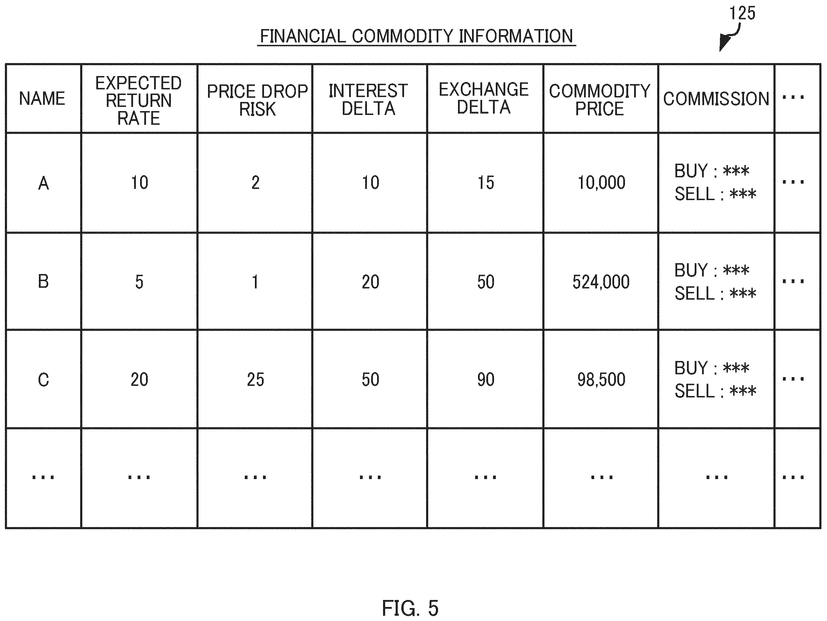

Subsequently, various types of information used by the portfolio creation assistance device 100 of the present embodiment are described. Fig. 5 illustrates an example of the financial commodity information 125 in the present embodiment.

The financial commodity information 125 of the present embodiment is a table in which information on various financial commodities is accumulated. As this information, the market sensitivity such as the expected return rate, the price drop risk, the interest delta, and the exchange delta, the commodity price (example: the stock index, the commodity futures prices, the foreign exchange rate, the foreign exchange forward rate, the long-short outstanding position ratio, the volatility of various indexes, the risk reversal, and the like), and various commissions (example: the buying and selling commission, the management commission), and the like related to various financial commodities (example: the stocks, the futures instruments, the foreign exchanges, and the like) distributed by the financial information distribution system 300 may be included.

The data structure thereof is, for example, a collection of records including data such as the expected return rate, the price drop risk, the interest delta, the exchange delta, the commodity price, and the commissions using the name of a financial commodity as a key.

Note that, the example of the financial commodity exemplified in the financial commodity information 125 in Fig. 5 is limited merely for convenience in description, and it is assumed that there is stored information on other various financial commodities (the same applies below).

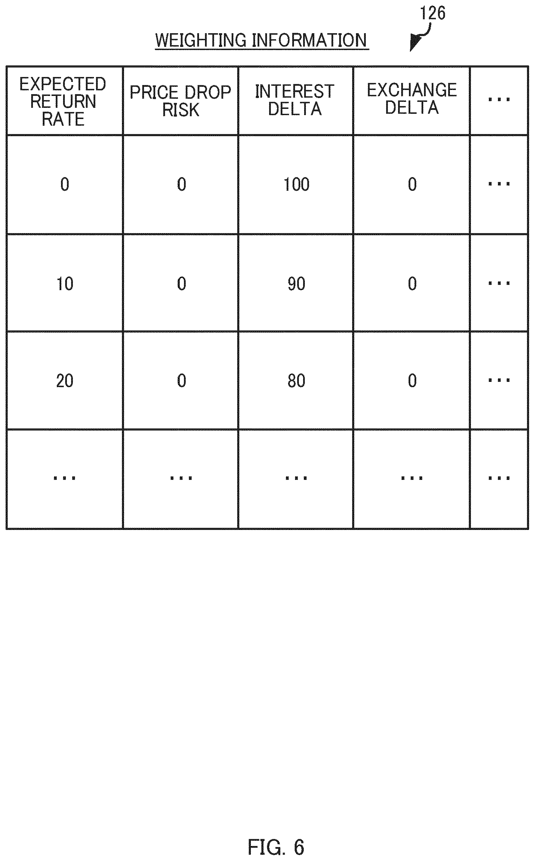

Additionally, Fig. 6 illustrates an example of the weighting information 126 in the present embodiment. The weighting information 126 of the present embodiment is a table in which information that defines a magnitude of the degree of importance of each of the items of the expected return rate, the price drop risk, the interest delta, and the exchange delta, assumed by the user in a financial institution or the like (one who considers the improvement of a current portfolio) is accumulated. That is, it is information defining the weights for the above-described respective items corresponding to the properties (example: a balance is considered important, the expected return rate and the price drop risk are considered important, or the expected return rate is considered important) of a portfolio as a target to be considered by a financial institution or the like.

The data structure thereof is, for example, a collection of records each including data on weight values for the respective items corresponding to each portfolio property using identification information on the portfolio property as a key.

---Flow Example---

Hereinafter, the practical procedure of a portfolio creation assistance method in the present embodiment is described with reference to the drawings. The various operations corresponding to the portfolio creation assistance method described below are implemented by a program read into a memory or the like and executed by the portfolio creation assistance device 100. Note that, this program includes codes for operating the various operations described below.

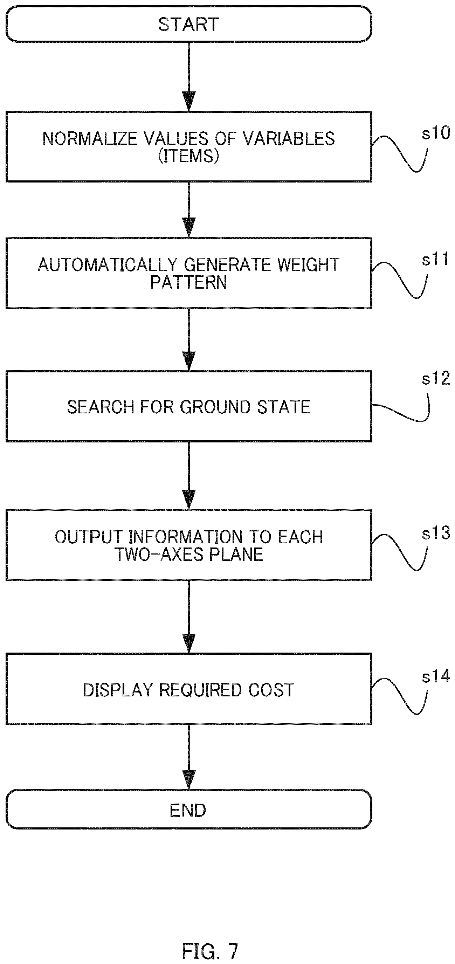

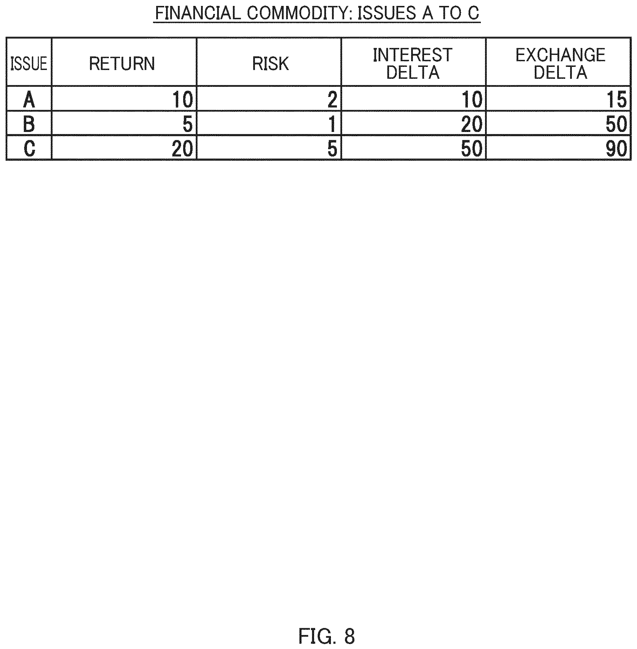

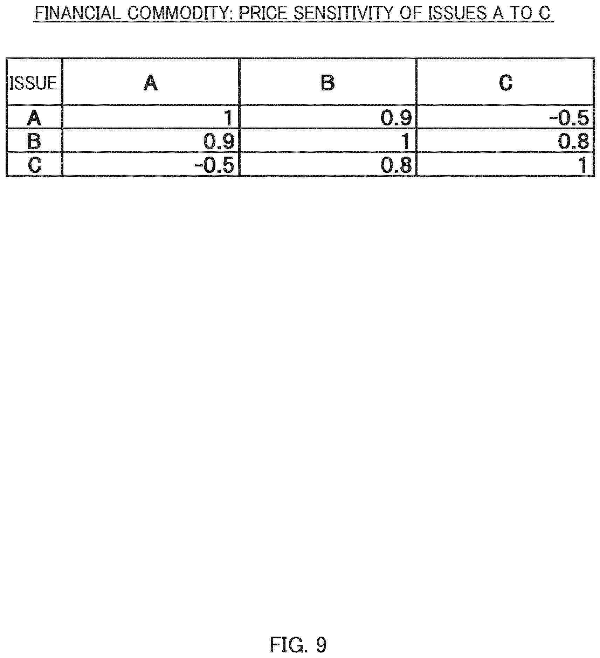

Fig. 7 is a diagram indicating a flow example of the portfolio creation assistance method in the present embodiment. Here, as an annealing machine, the portfolio creation assistance device 100 is assumed to calculate the ground state by using the above-described Ising model 1021 as a problem for a portfolio including, for example, three financial commodities (Figs. 8 and 9). Note that, the three financial commodities exemplified herein are issues "A" to "C" illustrated in Figs. 8 and 9.

First, the portfolio creation assistance device 100 normalizes values of the respective variables (items) in the above-described expression, "the price drop risk - the expected return rate - the interest delta + the exchange delta" (s10). The value normalized in this process is the value exemplified for each of the expected return rate, the price drop risk, the interest delta, and the exchange delta in Fig. 8.

Specifically, the value of each variable is changed such that each value is within a range from 1 to 10 based on the maximum value and the minimum value of the variables among the financial commodities. In the example in Fig. 8, the maximum value of the expected return rate is "20" of the issue "C", and the minimum value is "5" of the issue "B".

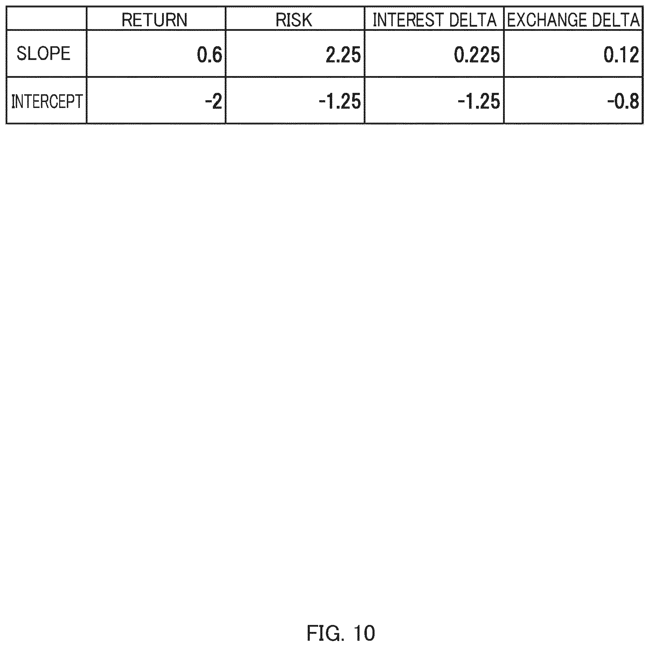

Accordingly, the portfolio creation assistance device 100 obtains a slope "0.6" and an intercept "-2" by solving an equation related to the maximum value, "10 = 20a + b", and an equation related to the minimum value, "1 = 5a + b", as simultaneous equations (see Fig. 10). Likewise, for the price drop risk, a slope "2.25" and an intercept "-1.25" are obtained (see Fig. 10). Likewise, for the interest delta, a slope "0.225" and an intercept "-1.25" are obtained (see Fig. 10). Likewise, for the exchange delta, a slope "0.12" and an intercept "-0.8" are obtained (see Fig. 10).

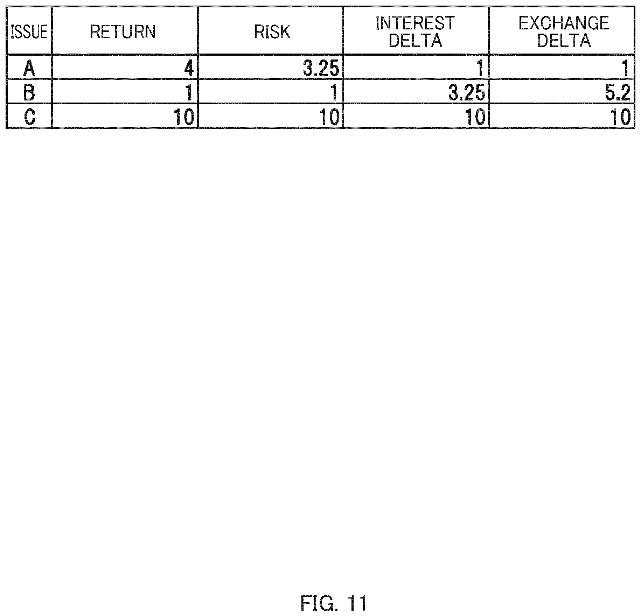

In this case, the portfolio creation assistance device 100 normalizes each variable of the above-described issues "A" to "C" based on each value of the slope and the intercept obtained for a corresponding variable as illustrated in Fig. 10, and thus the result in Fig. 111 is obtained. As illustrated in Fig. 11, the values of the variables all fall within the range from 1 to 10.

Subsequently, the portfolio creation assistance device 100 automatically generates a combination of coefficients of the variables within a range in which the total of the coefficients for the above-described variables, that is, the weight values, is 1 (s11). When the coefficient is "C", the above-described expression is expressed as Crisk·price drop risk - Cear·expected return rate - Cir·interest delta - Cfx·exchange delta.

For example, when there is assumed the combination of coefficients with the number of variable being set to "5" by the rate of 10%, the number of the combinations is "1001" or the like.

Subsequently, for a portfolio including the three financial commodities as described above, the portfolio creation assistance device 100, as an annealing machine, calculates the ground state by using the Ising model 1021 of the number of the combinations of coefficients generated in s11 as a problem and estimates an optimum portfolio (s12). Such searching itself for the ground state is similar to the processing in the already-existing techniques.

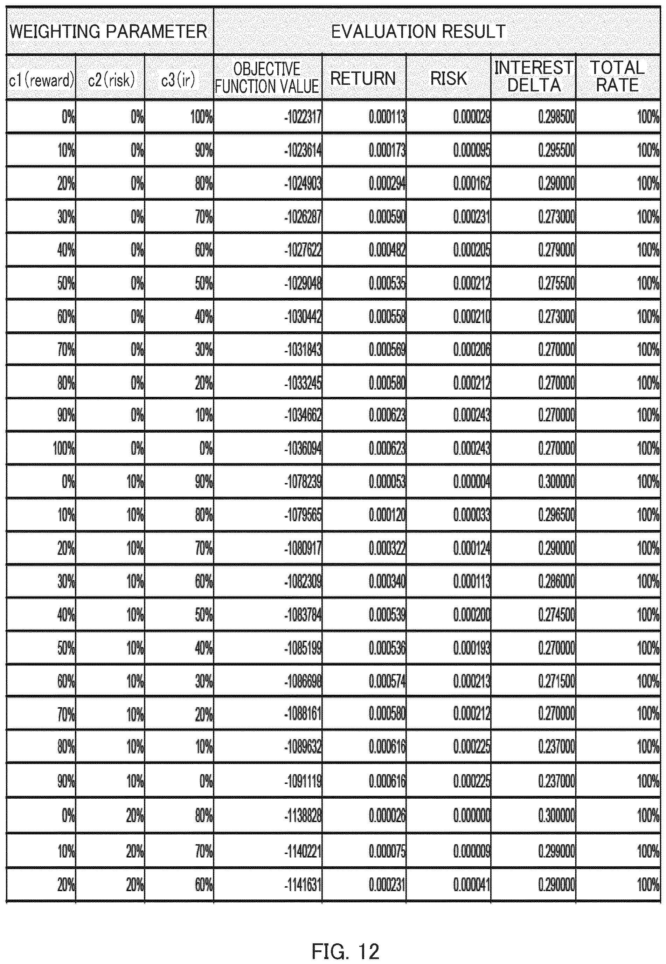

Fig. 12 shows the processing result from s12 described above, that is, the respective values of an objective function value (a value obtained from the expression: the price drop risk - the expected return rate - the interest delta + the exchange delta of each portfolio), the expected return rate, the price drop risk, the interest delta, and the exchange delta for each weight pattern. Note that, for the sake of simplifying the model, description herein is given of an example in which the weighting pattern for the variables of only the expected return rate, the price drop risk, and the interest delta out of variables is taken into consideration.

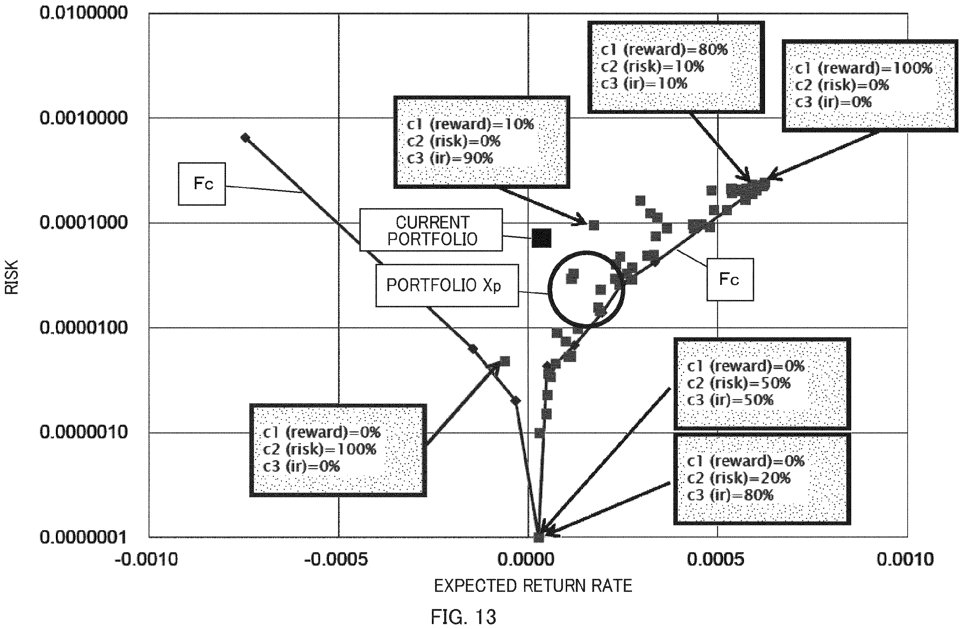

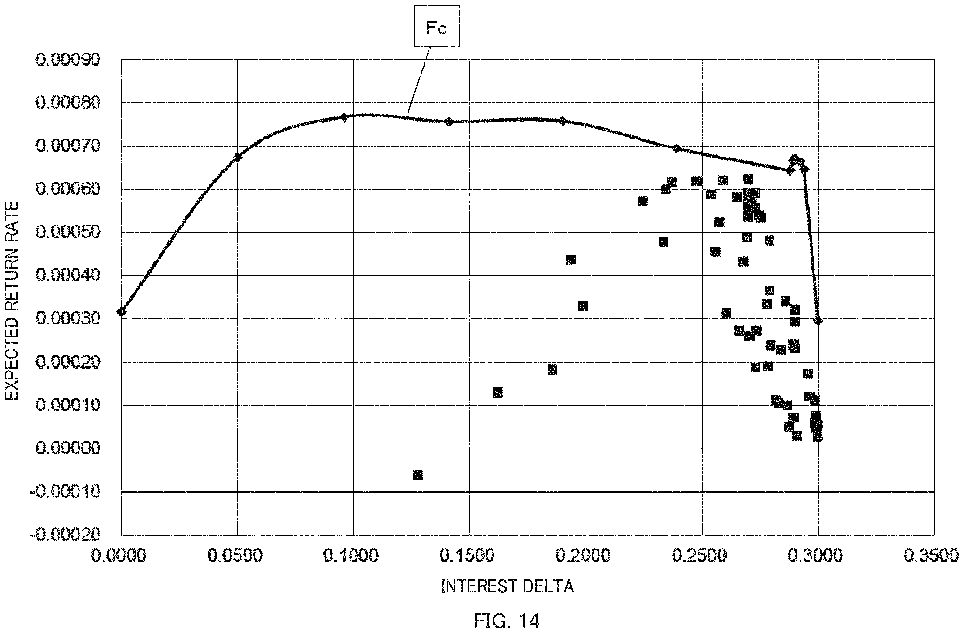

Next, based on the processing result indicated in Fig. 12, that is, the respective values of the expected return rate, the price drop risk, and the market sensitivity of each portfolio, the portfolio creation assistance device 100 plots the position of each of portfolios on at least one plane from among the plane defined by the two axes of the price drop risk and the expected return rate (see Fig. 13), the plane defined by the two axes of the interest delta and the expected return rate (see Fig. 14), and the plane defined by the two axes of the expected return rate and the exchange delta (not illustrated), draws, in the plane on which the plotting is performed, an efficient frontier curve Fc corresponding to the plane, and outputs the plane to the user terminal 200 (s13).

In this process, the portfolio creation assistance device 100 executes predetermined highlighting processing on portfolios Xp, out of the portfolios plotted on the plane defined by the two axes of the price drop risk and the expected return rate (see Fig. 13), that have a lower price drop risk and a higher expected return rate than that of a current portfolio Np of the user and that are plotted on a region above the efficient frontier curve Fc (in example in Fig. 13, the group of portfolios Xp is surrounded by a red circle).

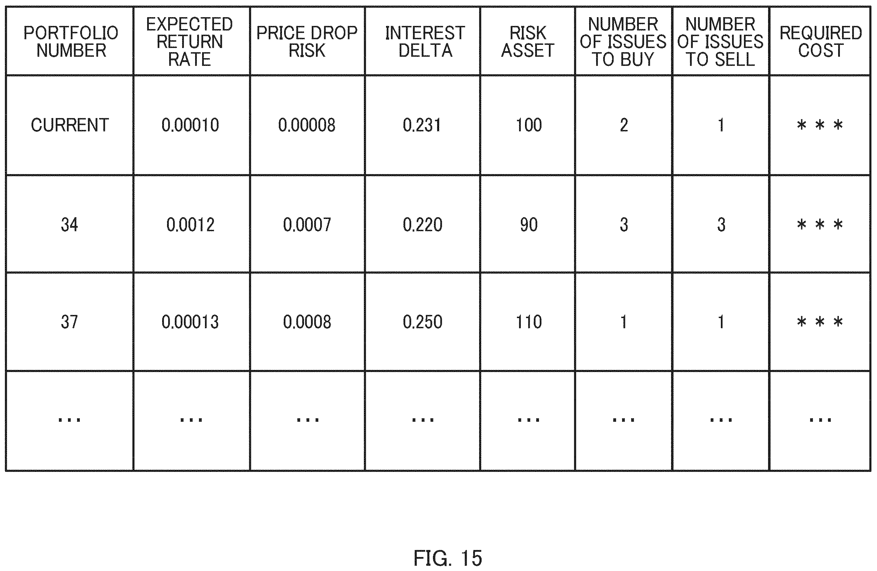

Additionally, as illustrated in Fig. 15, the portfolio creation assistance device 100 outputs the respective values of not only the expected return rate, the price drop risk, and the interest delta but also a risk asset, the number of issues to buy, the number of issues to sell, and a required cost of the above-described portfolios Xp to the user terminal 200 (s14).

In this case, the portfolio creation assistance device 100 identifies financial commodities that make a difference between each of the above-described portfolios Xp and the current portfolio of the user, and calculates the number of financial commodities required to buy as the number of issues to buy and calculates the number of financial commodities required to sell as the number of issues to sell when changing the current portfolio to the portfolio Xp. Then, the portfolio creation assistance device 100 calculates a buying cost by multiplying the number of issues to buy by a unit price of the buying cost (various commissions and payment for commodity to be paid to a brokerage company and the like), for example. Additionally, the portfolio creation assistance device 100 calculates a selling cost by multiplying the number of issues to sell by a unit price of the selling cost (various commissions and losses to be paid to a brokerage company and the like). Eventually, the portfolio creation assistance device 100 calculates the required cost by combining the above-described buying cost and selling cost.

On the other hand, the user can browse Figs. 13 to 15 described above through the user terminal 200, and, for example, the user can select a desired portfolio from the portfolios included in the portfolios Xp with recognition of not only the indexes such as the expected return rate, the price drop risk, and the interest delta but also the cost for changing a portfolio and can use the desired portfolio as a candidate for a content of portfolio revision.

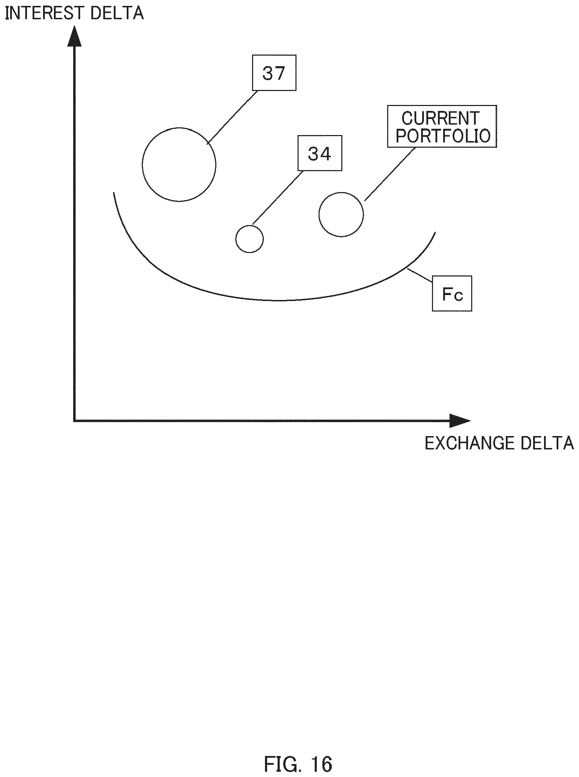

Note that, for the portfolios Xp, the portfolio creation assistance device 100 of the present embodiment preferably arranges an object having an attribute according to the magnitude of the value of return on risk on the plane defined by the two axes of the interest delta and the exchange delta and outputs the plane to the user terminal 200 (Fig. 16).

In this case, the portfolio creation assistance device 100 identifies a specific portfolio plotted on a region above the efficient frontier curve Fc out of the portfolios plotted on the plane defined by the two axes of the price drop risk and the expected return rate illustrated in Fig. 13 described above and calculates the value of return on risk by dividing the value of the expected return rate by the value of the price drop risk of the portfolio.

For example, a value of the expected return rate of a portfolio "0.00025" is divided by a value of the price drop risk "0.00001", and thus a value of the value of return on risk "25" is calculated.

Subsequently, for the specific portfolio, that is, the portfolio Xp, the portfolio creation assistance device 100 arranges an object having an attribute according to the magnitude of the value of return on risk on the plane defined by the two axes of the interest delta and the exchange delta and outputs the plane to the user terminal 200.

As this object, a display object in a predetermined shape such as circle and rectangle can be assumed, for example. Additionally, its attribute is assumed to be a size, color, shape, pattern, pattern of blinking or flashing, and the like according to the magnitude of the value of return on risk. With this, it is possible to express a portfolio based on all the viewpoints of the expected return rate, the price drop risk, and the market sensitivity (the interest delta and the exchange delta), that is, in a four-dimensional event, and present the portfolio to the user while clearly distinguishing it among portfolios.

So far, the best mode to implement the present invention and the like have been described specifically; however, the present invention is not limited thereto, and various changes can be made without departing from the gist thereof.

According to the present embodiment described above, it is possible to efficiently generate multiple portfolio candidates based on the investment policies of each financial institution and present the portfolio candidates to a user in an easily understandable form.

According to the descriptions herein, at least the followings are made explicit. To be specific, in the portfolio creation assistance device of the present embodiment, the computation unit may further execute processing of plotting the position of each of portfolios based on the values of the expected return rate, the price drop risk, and the market sensitivity of the portfolio concerned, on at least one plane from among the plane defined by the two axes of the price drop risk and the expected return rate, the plane defined by the two axes of the expected return rate and the interest delta as the market sensitivity, and the plane defined by the two axes of the expected return rate and the exchange delta as the market sensitivity, drawing, in the at least one plane on which the plotting is performed an efficient frontier curve corresponding to the plane, and outputting the plane to a predetermined device.

With this, the properties of each portfolio are clearly presented from multiple viewpoints, and the portfolio designing operation by a person in charge in a financial institution is effectively assisted. Consequently, it is possible to efficiently generate multiple portfolio candidates based on the investment policies of each financial institution and present the portfolio candidates to a user in a more easily understandable form.

Additionally, in the portfolio creation assistance device of the present embodiment, the computation unit may perform predetermined highlighting processing on a portfolio out of the portfolios plotted on the plane defined by the two axes of the price drop risk and the expected return rate that is a portfolio having a lower price drop risk and a higher return than those of a current portfolio of a predetermined user and being plotted on a region above the efficient frontier curve.

With this, it is possible to clearly present a new portfolio from the current portfolio that can be expected to have an improvement in both the expected return rate and risk. Consequently, it is possible to efficiently generate multiple portfolio candidates based on the investment policies of each financial institution and present the portfolio candidates to a user in a more easily understandable form.

Moreover, in the portfolio creation assistance device of the present embodiment, the computation unit may further perform processing of identifying a specific portfolio plotted on a region above the efficient frontier curve out of the portfolios plotted on the plane defined by the two axes of the price drop risk and the expected return rate and calculating a value of return on risk by dividing a value of the expected return rate by a value of the price drop risk in the specific portfolio, and processing of, for the specific portfolio, arranging an object having an attribute according to the magnitude of the value of return on risk on the plane defined by the two axes of the interest delta and the exchange delta, and outputting the plane to the predetermined device.

With this, it is possible to express a portfolio based on all the viewpoints of the expected return rate, the price drop risk, and the market sensitivity (the interest delta and the exchange delta), that is, in a four-dimensional event, and present the portfolio to the user. Consequently, it is possible to efficiently generate multiple portfolio candidates based on the investment policies of each financial institution and present the portfolio candidates to a user in a more easily understandable form.

Furthermore, in the portfolio creation assistance device of the present embodiment the computation unit may further execute, during the computation, processing of normalizing the values of the respective items of the expected return rate, the price drop risk, and the market sensitivity of each of the financial commodities included in the portfolio indicated by the information such that each of the values falls within a predetermined defined range and setting the normalized values into the corresponding items in the predetermined expression.

With this, it is possible to properly deal with a situation in which the ranges (scales of the number of digits) of the values of the respective items of the expected return rate, the price drop risk, and the market sensitivity are extremely different and make significant the expression as the Ising model. Consequently, it is possible to more efficiently generate multiple portfolio candidates based on the investment policies of each financial institution and present the portfolio candidates to a user in an easily understandable form.

Additionally, in the portfolio creation assistance device of the present embodiment, the computation unit may further execute processing of applying buying and selling costs on which information is held in advance to financial commodities that make the difference between at least one of the portfolios and a current portfolio of a predetermined user to identify a cost required for portfolio change from the current portfolio and outputting information on the cost to the predetermined device.

With this, it is possible to present the information on the cost for changing the portfolio, and consequently, it is possible to efficiently generate multiple portfolio candidates based on the investment policies of each financial institution and present the portfolio candidates to a user in a more easily understandable form.

Moreover, the portfolio creation assistance device of the present embodiment may be a CMOS annealing machine that solves a combinatorial optimization problem relating to the Ising model.

With this, it is possible to recreate the operations of the Ising model in a pseudo manner by a circuit using an element such as a CMOS (Complementary Metal Oxide Semiconductor) of a semiconductor and efficiently obtain a practical solution of the combinatorial optimization problem such as the creation of portfolio candidates for financial commodities under ambient temperature. Consequently, it is possible to more efficiently generate multiple portfolio candidates based on the investment policies of each financial institution and present the portfolio candidates to a user in an easily understandable form.

Furthermore, in the portfolio creation assistance method of the present embodiment, the information processing device may perform predetermined highlighting processing on a portfolio, out of the portfolios plotted on the plane defined by the two axes of the price drop risk and the expected return rate, that has a lower price drop risk and a higher expected return rate than that of a current portfolio of a predetermined user and that is plotted on a region above the efficient frontier curve.

Additionally, in the portfolio creation assistance method of the present embodiment, the information processing device may further perform processing of identifying a specific portfolio plotted on a region above the efficient frontier curve out of the portfolios plotted on the plane defined by the two axes of the price drop risk and the expected return rate and calculating a value of return on risk by dividing a value of the expected return rate by a value of the price drop risk specific portfolio, and processing of, for the specific portfolio, arranging an object having an attribute according to the magnitude of the value of return on risk on the plane defined by the two axes of the interest delta and the exchange delta and outputting the plane to a predetermined device.

Moreover, in the portfolio creation assistance method of the present embodiment the information processing device may further execute, during the computation, processing of normalizing the values of the respective items of the expected return rate, the price drop risk, and the market sensitivity of each of financial commodities included in the portfolio indicated by the information such that each of the values falls within a predetermined defined range and setting the normalized values into the corresponding items in the predetermined expression.

Furthermore, in the portfolio creation assistance method of the present embodiment, the information processing device may further execute processing of applying buying and selling costs on which information is held in advance to financial commodities that make the difference between at least one of the portfolios and a current portfolio of a predetermined user to identify a cost required for portfolio change from the current portfolio and outputting information on the cost to the predetermined device.

Additionally, in the portfolio creation assistance method of the present embodiment, the information processing device may be a CMOS annealing machine that solves a combinatorial optimization problem relating to the Ising model.

[Reference Signs List]

| 10 | network |
| 100 | portfolio creation assistance device (annealing machine) |
| 101 | storage unit |
| 102 | program |
| 1021 | Ising model |
| 103 | memory |
| 104 | computation unit |
| 105 | communication unit |
| 125 | financial commodity information |
| 126 | weighting information |
| 200 | user terminal |
| 300 | financial information distribution system |

**Claims**

1. A portfolio creation assistance device, comprising:

   a storage unit storing information on each of financial commodities; and
   a computation unit performing a computation of an Ising model of a predetermined expression in which items of an expected return rate, a price drop risk, and a market sensitivity in a portfolio including combined predetermined ones of the financial commodities indicated by the information are combined with weights for the respective items, wherein
   the computation unit outputs portfolios each obtained for one of patterns of the weights for the respective items as a result of the computation to a predetermined device, the portfolios each minimizing a value of the predetermined expression.

2. The portfolio creation assistance device according to claim 1, wherein

   the computation unit further executes
   processing of plotting a position of each of the portfolios based on values of an expected return rate, a price drop risk, and a market sensitivity in the portfolio concerned, on at least one plane from among a plane defined by two axes of a price drop risk and an expected return rate, a plane defined by two axes of an expected return rate and an interest delta as a market sensitivity, and a plane defined by two axes of an expected return rate and an exchange delta as a market sensitivity, drawing, on the at least one plane on which the plotting is performed, an efficient frontier curve corresponding to the plane, and outputting the plane to a predetermined device.

3. The portfolio creation assistance device according to claim 2, wherein

   the computation unit performs
   predetermined highlighting processing on a portfolio out of the portfolios plotted on the plane defined by the two axes of the price drop risk and the expected return rate, the portfolio having a lower price drop risk and a higher expected return rate than those of a current portfolio of a predetermined user and being plotted on a region above the efficient frontier curve.

4. The portfolio creation assistance device according to claim 3, wherein

   the computation unit further performs
   processing of identifying a specific portfolio plotted on a region above the efficient frontier curve out of the portfolios plotted on the plane defined by the two axes of the price drop risk and the expected return rate and calculating a value of return on risk by dividing a value of the expected return rate by a value of the price drop risk in the specific portfolio, and processing of, for the specific portfolio, arranging an object having an attribute according to a magnitude of the value of return on risk on the plane defined by the two axes of the interest delta and the exchange delta and outputting the plane to the predetermined device.

5. The portfolio creation assistance device according to claim 1, wherein

   during the computation, the computation unit further executes
   processing of normalizing the values of the respective items of the expected return rate, the price drop risk, and the market sensitivity of each of the financial commodities included in the portfolio indicated by the information such that each of the values falls within a predetermined defined range and setting the normalized values into the corresponding items in the predetermined expression.

6. The portfolio creation assistance device according to claim 1, wherein

   the computation unit further executes
   processing of applying buying and selling costs on which information is held in advance to financial commodities that make a difference between at least one of the portfolios and a current portfolio of a predetermined user to identify a cost required for portfolio change from the current portfolio and outputting information on the cost to the predetermined device.

**7.** The portfolio creation assistance device according to claim 1, wherein
the portfolio creation assistance device is a CMOS annealing machine that solves a combinatorial optimization problem relating to the Ising model.

**8.** A portfolio creation assistance method, wherein
an information processing device including a storage unit storing information on each of financial commodities performs:

performing a computation of an Ising model of a predetermined expression in which items of an expected return rate, a price drop risk, and a market sensitivity in a portfolio including combined predetermined ones of the financial commodities indicated by the information are combined with weights for the respective items; and outputting portfolios each obtained for one of patterns of the weights for the respective items as a result of the computation to a predetermined device, the portfolios each minimizing a value of the predetermined expression.

**9.** The portfolio creation assistance method according to claim 8, wherein

the information processing device further executes
processing of plotting a position of each of the portfolios based on values of an expected return rate, a price drop risk, and a market sensitivity in the portfolio concerned, on at least one plane from among a plane defined by two axes of a price drop risk and an expected return rate, a plane defined by two axes of an expected return rate and an interest delta as a market sensitivity, and a plane defined by two axes of an expected return rate and an exchange delta as a market sensitivity, drawing, on the at least one plane on which the plotting is performed, an efficient frontier curve corresponding to the plane, and outputting the plane to a predetermined device.

**10.** The portfolio creation assistance method according to claim 9, wherein

the information processing device performs
predetermined highlighting processing on a portfolio out of the portfolios plotted on the plane defined by the two axes of the price drop risk and the expected return rate, the portfolio having a lower price drop risk and a higher expected return rate than those of a current portfolio of a predetermined user and being plotted on a region above the efficient frontier curve.

**11.** The portfolio creation assistance method according to claim 10, wherein

the information processing device further performs
processing of identifying a specific portfolio plotted on a region above the efficient frontier curve out of the portfolios plotted on the plane defined by the two axes of the price drop risk and the expected return rate and calculating a value of return on risk by dividing a value of the expected return rate by a value of the price drop risk in the specific portfolio, and processing of, for the specific portfolio, arranging an object having an attribute according to a magnitude of the value of return on risk on the plane defined by the two axes of the interest delta and the exchange delta and outputting the plane to the predetermined device.

**12.** The portfolio creation assistance method according to claim 8, wherein

during the computation, the information processing device further executes
processing of normalizing the values of the respective items of the expected return rate, the price drop risk, and the market sensitivity of each of the financial commodities included in the portfolio indicated by the information such that each of the values falls within a predetermined defined range and setting the normalized values into the corresponding items in the predetermined expression.

**13.** The portfolio creation assistance method according to claim 8, wherein

the information processing device further executes
processing of applying buying and selling costs on which information is held in advance to financial commodities that make a difference between at least one of the portfolios and a current portfolio of a predetermined user to identify a cost required for portfolio change from the current portfolio and outputting information on the cost to the predetermined device.

**14.** The portfolio creation assistance method according to claim 8, wherein
the information processing device is a CMOS annealing machine that solves a combinatorial optimization problem relating to the Ising model.

100

PORTFOLIO
CREATION
ASSISTANCE
DEVICE

10

200 — USER TERMINAL

. . .

300 — FINANCIAL
INFORMATION
DISTRIBUTION
SYSTEM

. . .

FIG. 1

100

101

104

STORAGE UNIT

COMPUTATION
UNIT

102

1021

PROGRAM | ISING MODEL

103

MEMORY

125

FINANCIAL COMMODITY
INFORMATION

126

WEIGHTING INFORMATION

105

COMMUNICATION
UNIT

BUS

FIG. 2

FIG. 3

FIG. 4

FINANCIAL COMMODITY INFORMATION

125

| NAME | EXPECTED RETURN RATE | PRICE DROP RISK | INTEREST DELTA | EXCHANGE DELTA | COMMODITY PRICE | COMMISSION | ··· |
|---|---|---|---|---|---|---|---|
| A | 10 | 2 | 10 | 15 | 10,000 | BUY : ***<br>SELL : *** | ··· |
| B | 5 | 1 | 20 | 50 | 524,000 | BUY : ***<br>SELL : *** | ··· |
| C | 20 | 25 | 50 | 90 | 98,500 | BUY : ***<br>SELL : *** | ··· |
| ··· | ··· | ··· | ··· | ··· | ··· | ··· | ··· |

FIG. 5

EP 3 975 101 A1

WEIGHTING INFORMATION 126

| EXPECTED RETURN RATE | PRICE DROP RISK | INTEREST DELTA | EXCHANGE DELTA | . . . |
|---|---|---|---|---|
| 0 | 0 | 100 | 0 | . . . |
| 10 | 0 | 90 | 0 | . . . |
| 20 | 0 | 80 | 0 | . . . |
| . . . | . . . | . . . | . . . | . . . |

FIG. 6

START

NORMALIZE VALUES OF VARIABLES
(ITEMS) — s10

AUTOMATICALLY GENERATE WEIGHT
PATTERN — s11

SEARCH FOR GROUND STATE — s12

OUTPUT INFORMATION TO EACH
TWO-AXES PLANE — s13

DISPLAY REQUIRED COST — s14

END

FIG. 7

FINANCIAL COMMODITY: ISSUES A TO C

| ISSUE | RETURN | RISK | INTEREST DELTA | EXCHANGE DELTA |
|---|---|---|---|---|
| A | 10 | 2 | 10 | 15 |
| B | 5 | 1 | 20 | 50 |
| C | 20 | 5 | 50 | 90 |

FIG. 8

FINANCIAL COMMODITY: PRICE SENSITIVITY OF ISSUES A TO C

| ISSUE | A | B | C |
|---|---|---|---|
| A | 1 | 0.9 | -0.5 |
| B | 0.9 | 1 | 0.8 |
| C | -0.5 | 0.8 | 1 |

FIG. 9

| | RETURN | RISK | INTEREST DELTA | EXCHANGE DELTA |
|---|---|---|---|---|
| SLOPE | 0.6 | 2.25 | 0.225 | 0.12 |
| INTERCEPT | -2 | -1.25 | -1.25 | -0.8 |

FIG. 10

| ISSUE | RETURN | RISK | INTEREST DELTA | EXCHANGE DELTA |
|---|---|---|---|---|
| A | 4 | 3.25 | 1 | 1 |
| B | 1 | 1 | 3.25 | 5.2 |
| C | 10 | 10 | 10 | 10 |

FIG. 11

| WEIGHTING PARAMETER | | | EVALUATION RESULT | | | | |
|---|---|---|---|---|---|---|---|
| c1 (reward) | c2 (risk) | c3 (ir) | OBJECTIVE FUNCTION VALUE | RETURN | RISK | INTEREST DELTA | TOTAL RATE |
| 0% | 0% | 100% | -1022317 | 0.000113 | 0.000029 | 0.298500 | 100% |
| 10% | 0% | 90% | -1023614 | 0.000173 | 0.000095 | 0.295500 | 100% |
| 20% | 0% | 80% | -1024903 | 0.000294 | 0.000162 | 0.290000 | 100% |
| 30% | 0% | 70% | -1026287 | 0.000590 | 0.000231 | 0.273000 | 100% |
| 40% | 0% | 60% | -1027622 | 0.000482 | 0.000205 | 0.279000 | 100% |
| 50% | 0% | 50% | -1029048 | 0.000535 | 0.000212 | 0.275500 | 100% |
| 60% | 0% | 40% | -1030442 | 0.000558 | 0.000210 | 0.273000 | 100% |
| 70% | 0% | 30% | -1031843 | 0.000569 | 0.000206 | 0.270000 | 100% |
| 80% | 0% | 20% | -1033245 | 0.000580 | 0.000212 | 0.270000 | 100% |
| 90% | 0% | 10% | -1034662 | 0.000623 | 0.000243 | 0.270000 | 100% |
| 100% | 0% | 0% | -1036094 | 0.000623 | 0.000243 | 0.270000 | 100% |
| 0% | 10% | 90% | -1078239 | 0.000053 | 0.000004 | 0.300000 | 100% |
| 10% | 10% | 80% | -1079565 | 0.000120 | 0.000033 | 0.296500 | 100% |
| 20% | 10% | 70% | -1080917 | 0.000322 | 0.000124 | 0.290000 | 100% |
| 30% | 10% | 60% | -1082309 | 0.000340 | 0.000113 | 0.286000 | 100% |
| 40% | 10% | 50% | -1083784 | 0.000539 | 0.000200 | 0.274500 | 100% |
| 50% | 10% | 40% | -1085199 | 0.000536 | 0.000193 | 0.270000 | 100% |
| 60% | 10% | 30% | -1086698 | 0.000574 | 0.000213 | 0.271500 | 100% |
| 70% | 10% | 20% | -1088161 | 0.000580 | 0.000212 | 0.270000 | 100% |
| 80% | 10% | 10% | -1089632 | 0.000616 | 0.000225 | 0.237000 | 100% |
| 90% | 10% | 0% | -1091119 | 0.000616 | 0.000225 | 0.237000 | 100% |
| 0% | 20% | 80% | -1138828 | 0.000026 | 0.000000 | 0.300000 | 100% |
| 10% | 20% | 70% | -1140221 | 0.000075 | 0.000009 | 0.299000 | 100% |
| 20% | 20% | 60% | -1141631 | 0.000231 | 0.000041 | 0.290000 | 100% |

FIG. 12

FIG. 13

FIG. 14

| PORTFOLIO NUMBER | EXPECTED RETURN RATE | PRICE DROP RISK | INTEREST DELTA | RISK ASSET | NUMBER OF ISSUES TO BUY | NUMBER OF ISSUES TO SELL | REQUIRED COST |
|---|---|---|---|---|---|---|---|
| CURRENT | 0.00010 | 0.00008 | 0.231 | 100 | 2 | 1 | ＊ ＊ ＊ |
| 34 | 0.0012 | 0.0007 | 0.220 | 90 | 3 | 3 | ＊ ＊ ＊ |
| 37 | 0.00013 | 0.0008 | 0.250 | 110 | 1 | 1 | ＊ ＊ ＊ |
| ... | ... | ... | ... | ... | ... | ... | ... |

FIG. 15

INTEREST DELTA

37

34

CURRENT
PORTFOLIO

Fc

EXCHANGE DELTA

FIG. 16

<div style="text-align:center">**INTERNATIONAL SEARCH REPORT**</div>

| | International application No. |
|---|---|
| | PCT/JP2020/017820 |

**A. CLASSIFICATION OF SUBJECT MATTER**
G06Q 40/06(2012.01)i
FI: G06Q40/06

According to International Patent Classification (IPC) or to both national classification and IPC

**B. FIELDS SEARCHED**

Minimum documentation searched (classification system followed by classification symbols)
G06Q40/06

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-51350 A (HITACHI, LTD.) 11.04.2016 (2016-04-11) entire text, all drawings | 1-14 |
| A | JP 2009-294765 A (QUANTS RESEARCH INC.) 17.12.2009 (2009-12-17) entire text, all drawings | 1-14 |
| A | JP 2004-220196 A (QUANTS RESEARCH INC.) 05.08.2004 (2004-08-05) entire text, all drawings | 1-14 |
| A | 渡辺 元, ポートフォリオ最適化・株価予測など量子アニーリングマシンで実証実験中, NEW MEDIA, 01 May 2019, vol. 37, no. 5, pp. 46-48, entire text, all drawings, non-official translation (WATANABE, Gen, "During a demonstration experiment with Quantum annealing machine such as portfolio optimization and stock price prediction") | 1-14 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 June 2020 (30.06.2020) | 14 July 2020 (14.07.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 975 101 A1**

C (Continuation). DOCUMENTS CONSIDERED TO BE RELEVANT

| Category* | Citation of document, with indication, where appropriate, of the relevant passages | Relevant to claim No. |
|---|---|---|
| A | 山岡 雅直，CMOS アニーリングマシンの概要，電子情報通信学会 2019 年総合大会講演論文集エレクトロニクス 2, 05 March 2019, pp. SS-38 to SS-39, ISSN:1349-1369, entire text, all drawings, (YAMAOKA, Masanao, "CMOS Annealing Machine", Proceedings of the 2019 IEICE General Conference: Electronics 2) | 1-14 |

Form PCT/ISA/210 (continuation of second sheet) (January 2015)

35

**INTERNATIONAL SEARCH REPORT**
Information on patent family members

| | | International application No. |
| --- | --- | --- |
| | | PCT/JP2020/017820 |

| Patent Documents referred in the Report | Publication Date | Patent Family | Publication Date |
| --- | --- | --- | --- |
| JP 2016-51350 A | 11 Apr. 2016 | US 2016/0063391 A1 entire text, all drawings | |
| JP 2009-294765 A | 17 Dec. 2009 | (Family: none) | |
| JP 2004-220196 A | 05 Aug. 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016157333 A

- JP 2006221679 A

**Non-patent literature cited in the description**

- **E. FARHI et al.** A quantum adiabatic evolution algorithm applied to random instances of an NP-complete problem. *Science,* 2001, vol. 292, 472

- **F. BARAHONA.** On the computational complexity of Isingspin glass models. *J. Phys. A: Math. Gen.,* 1982, vol. 15, 3241